# EUROPEAN PATENT APPLICATION

(11) **EP 3 379 754 A1**
(43) Date of publication of application: **26.09.2018**
(21) Application number: 18163574.9
(22) Date of filing: 23.03.2018
(51) Int. Cl.: H04L 1/18

(54) **METHOD, APPARATUS AND DEVICE FOR RETRANSMITTING CODE BLOCKS**

(30) Priority: 24.03.2017 CN 201710184801
(71) Applicant: Yulong Computer Telecommunication Scientific (Shenzhen) Co., Ltd., Shenzhen, Guangdong 518057 (CN)
(72) Inventor: Li, Mingju, Shenzhen, Guangdong 518057 (CN); Zhang, Yunfei, Shenzhen, Guangdong 518057 (CN)
(74) Representative: Laufhütte, Dieter

(57) **Abstract**

The present invention provides a method and an apparatus for retransmitting Code Blocks, wherein, the method comprises sending a control command and a Transport Block to a second device by a first device; the Transport Block comprises at least one Code Block Group which is a basic unit for sending the Transport Block; receiving a feedback character of Hybrid Automatic Repeat request corresponding to each of the Code Block Groups in the Transport Block sent from the second device by the first device; if at least one of the feedback characters of Hybrid Automatic Repeat request indicates that at least one of the Code Block Groups is not received successfully, the first device retransmits a Transport Block containing the at least one unsuccessfully-received Code Block Group to the second device, and the first device sends a corresponding control signal for the second device to identify the at least one Code Block Group retransmitted. The technical scheme provided by the present invention has an advantage of high efficiency.

## Description

### Technical Field

The present invention relates to the field of electronics and communication, and in particular relates to a method, an apparatus and a device for retransmitting Code Blocks.

### Background

Under the circumstances of Long Time Evolution (LTE) in prior art, data is transmitted in basic units of Transport Blocks (TBs), and one TB only has one Hybrid Automatic Repeat request (HARQ), for example, one Bit of feedback which is ACK or NACK. Even if one TB is divided into multiple Code Blocks (CBs) to be sent, the HARQ feedback is still one Bit, and as a result, when a TB is divided into multiple CBs to be sent, even if only one CB is falsely transmitted, the HARQ feedback would be NACK, and the entire TB would need to be retransmitted, which may result in low efficiency.

### Summary of the Invention

A method of retransmitting Code Blocks provided in the present application can realize high efficiency retransmission of Code Blocks.

In a first aspect, a method of retransmitting Code Blocks provided comprises:
sending a control command and a Transport Block to a second device by a first device, wherein, the Transport Block comprises at least one Code Block Group which is a basic unit for sending the Transport Block;
receiving a feedback character of Hybrid Automatic Repeat request corresponding to each of the Code Block Groups in the Transport Block sent from the second device by the first device;
if at least one of the feedback characters of Hybrid Automatic Repeat request indicates that at least one of the Code Block Groups is not received successfully, the first device retransmits a Transport Block containing the at least one unsuccessfully-received Code Block Group to the second device, and the first device sends a corresponding control signal for the second device to identify the at least one Code Block Group retransmitted.

The control signal comprises a Hybrid Automatic Repeat request process number of the Transport Block where the at least one Code Block Group retransmitted is located, and one serial number of the at least one Code Block Group retransmitted in the Transport Block; different Transport Blocks have identical serial number for Code Block Groups in the respective Transport Block, and the serial number in one Transport Block uniquely identifies one Code Block Group in one Transport Block.

Optionally, the control signal comprises a Hybrid Automatic Repeat request process number of the at least one Code Block Group retransmitted; and Code Block Groups in one Transport Block have different Hybrid Automatic Repeat request process numbers.

In a second aspect, a method of retransmitting Code Blocks provided comprises:
receiving a control command and a Transport Block sent from a first device by a second device, wherein, the Transport Block comprises at least one Code Block Group which is a basic unit for sending the Transport Block;
sending a feedback character of Hybrid Automatic Repeat request corresponding to each of the Code Block Groups in the Transport Block to the first device by the second device;
receiving a control signal and a Transport Block from the first device, acquiring an identification of at least one Code Block Group retransmitted according to the control signal, and combining the at least one Code Block Group retransmitted with a Code Block Group corresponding to the identification stored in a terminal by the second device, wherein, the Transport Block comprises at least one unsuccessfully-received Code Block Group retransmitted by the first device.

In a third aspect, an apparatus for retransmitting Code Blocks provided comprises:
a transceiver unit, for sending a control command and a Transport Block to a second device, wherein, the Transport Block comprises at least one Code Block Group which is a basic unit for sending the Transport Block, and also for receiving a feedback character of Hybrid Automatic Repeat request corresponding to each of the Code Block Groups in the Transport Block sent from the second device;
a processing unit, for retransmitting a Transport Block containing at least one unsuccessfully-received Code Block Group to the second device and sending a corresponding control signal for the second device to identify the at least one Code Block Group retransmitted under the condition that at least one of the feedback characters of Hybrid Automatic Repeat request indicates that at least one Code Block Group is not received successfully.

In a fourth aspect, an apparatus for retransmitting Code Blocks provided comprises:
a transceiver unit, for receiving a control command and a Transport Block from a first device, wherein, the Transport Block comprises at least one Code Block Group which is a basic unit for sending the Transport Block, and also for sending a feedback character of Hybrid Automatic Repeat request corresponding to each of the Code Block Groups in the Transport Block to the first device;
a processing unit, for receiving a control signal sent from the first device and a Transport Block containing at least one unsuccessfully-received Code Block Group retransmitted by the first device, acquiring an identification of the retransmitted at least one Code Block Group according to the control signal, and combining the at least one Code Block Group retransmitted with a Code Block Group corresponding to the identification stored in a terminal.

In a fifth aspect, an electronic device for retransmitting Code Blocks comprises a processor, a memory and a transceiver interconnected by a bus line, the transceiver is for sending and receiving data, the memory is for storing program codes, the processor is for calling the program codes stored in the memory to execute the following steps:
sending a control command and a Transport Block to a second device, wherein, the Transport Block comprises at least one Code Block Group which is a basic unit for sending the Transport Block;
receiving a feedback character of Hybrid Automatic Repeat request corresponding to each of the Code Block Groups in the Transport Block sent from the second device;
if at least one of the feedback characters of Hybrid Automatic Repeat request indicates that at least one Code Block Group is not received successfully, retransmitting a Transport Block containing at least one unsuccessfully-received Code Block Group to the second device and sending a corresponding control signal for the second device to identify the at least one Code Block Group retransmitted.

In a sixth aspect, an electronic device for retransmitting Code Blocks comprises a processor, a memory and a transceiver interconnected by a bus line, the transceiver is for sending and receiving data, the memory is for storing program codes, the processor is for calling the program codes stored in the memory to execute the following steps:
receiving a control command and a Transport Block sent from a first device, wherein, the Transport Block comprises at least one Code Block Group which is a basic unit for sending the Transport Block;
sending a feedback character of Hybrid Automatic Repeat request corresponding to each of the Code Block Groups in the Transport Block to the first device;
receiving a control signal sent from the first device and a Transport Block containing at least one unsuccessfully-received Code Block Group retransmitted by the first device, acquiring an identification of the at least one Code Block Group retransmitted according to the control signal, and combining the at least one Code Block Group retransmitted with a Code Block Group corresponding to the identification stored in a terminal.

In a seventh aspect, a device provided comprises the electronic device provided in the fifth or seventh aspect.

In the technical solution provided by the present invention, the first device sends a control signal corresponding to the CB Groups to be retransmitted, so that retransmission based on basic units of CB Groups is made possible, which may have the advantage of high efficiency.

### Brief Description of the Drawings

In order to more clearly describe the technical solutions in the embodiments of the present invention or in the prior art, hereinafter, the accompanying drawings required to be used for describing the embodiments or the prior art will be briefly introduced. Apparently, the accompanying drawings described below are only directed to some embodiments of the present invention, and for a person skilled in the art, without expenditure of creative labor, other drawings can be derived on the basis of these accompanying drawings.
Figure 1 is a structural schematic diagram of a Transport Block;
Figure 2 is a flow chart of a method of retransmitting Code Blocks provided by a preferred embodiment of the present invention;
Figure 3 is a flow chart of a method of retransmitting Code Blocks provided by another preferred embodiment of the present invention;
Figure 4 is a schematic diagram of an apparatus for retransmitting Code Blocks provided by an embodiment of the present invention;
Figure 5 is a schematic diagram of an apparatus for retransmitting Code Blocks provided by another embodiment of the present invention;
Figure 6 is a structural diagram of a device provided by an embodiment of the present invention
Figure 7 is a structural diagram of another device provided by an embodiment of the present invention.

### Detailed Description of Embodiments

A clear and complete description of the technical solutions of the embodiments of the present invention is given below, in conjunction with the accompanying drawings. Apparently, the embodiments described below are part of, but not all of, the embodiments of the present invention. All the other embodiments, obtained by a person skilled in the art on the basis of the embodiments described in the present invention without expenditure of creative labor, belong to the protection scope of the present invention.

In the present invention, the first device may in particular be a base station, although it may also be other types of devices, such as a smart terminal, in a practical application; the second device may in particular be a smart terminal, although it may also be a base station when the first device is a smart terminal. The embodiments of the present invention are not limited to the above-mentioned forms of the first and second devices.

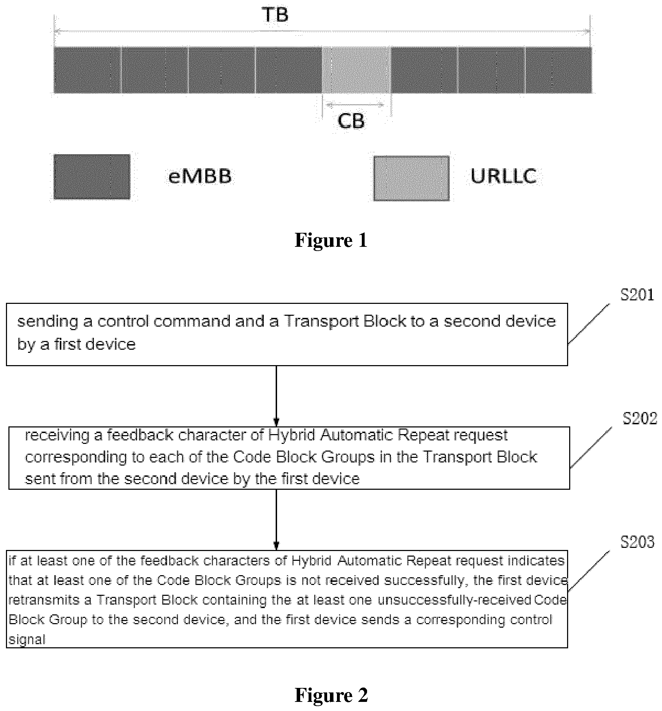

In New Radio (NR) technology, because multiple types of services such as enhanced Mobile BroadBand (eMBB) and Ultra-Reliable and Low Latency Communications (URLLC) need to be supported simultaneously, diversity multiplexing of the multiple types of services is required. Such diversity multiplexing may possibly cause that a first device allocates N Resource Blocks (RBs) of one Slot to eMBB UE#1, and the data and control signal corresponding to UE#1 are configured to be sent in Slot1 by the first device, however, in the middle of Slot1, a service of URLLC UE#2 suddenly arrived, and in order to meet the time-delay requirement for URLLC service, resource is required to be immediately allocated to URLLC UE#2, thus it is possible that part of symbols in the middle of Slot1 is then allocated to URLLC UE#2, that is to say, part of or all of the N Resource Blocks do not transmit the data and control signal of eMBB UE#1 in the duration of this part of symbols (as shown in Figure 1, one CB in the middle is allocated to URLLC UE#2), but instead transmit the data and control signal of URLLC UE#2. In such situation, one TB of eMBB UE#1 would be divided into multiple CBs to be transmitted, but even if only one CB is falsely transmitted, one Bit of HARQ feedback which is NACK is still returned, and as a result, the entire TB would need to be retransmitted. This causes very low efficiency, because the TB of eMBB UE#1 is relatively large.

In order to increase efficiency, it is proposed to send HARQ feedback in a form of CB Groups, wherein the size of a CB Group is smaller than or equal to the size of a TB. In this way, when a TB is very large, it can be divided into a plurality of CB Groups for feedback, i.e., one Bit of HARQ feedback is configured for each CB Group, so that only those falsely transmitted CB Groups, with a feedback of NACK, need to be retransmitted, it is not required to retransmit the entire TB. The NACK configuration of the above-mentioned one Bit of feedback may be that the value of 0 for the one Bit corresponds to NACK, and the value of 1 corresponds to ACK; or vice versa. The present invention is not limited to the above-mentioned specific values for ACK or NACK. In such situation, how to announce the unsuccessfully-received CB Group that corresponds to the retransmitted CB Group is a problem that needs to be solved. Thus, the present invention provides a method of retransmitting Code Blocks to solve the problem of announcing the identification of the retransmitted CB Group, so as to support retransmission based on basic units of CB Groups and improve efficiency.

Referring to Figure 2, a method of retransmitting Code Blocks provided, as shown in Figure 2, comprises:
Step 201, sending a control command and a Transport Block to a second device by a first device, wherein, the Transport Block comprises at least one Code Block Group which is a basic unit for sending the Transport Block.
Step 202, receiving a feedback character of Hybrid Automatic Repeat request corresponding to each of the Code Block Groups in the Transport Block sent from the second device by the first device.

The HARQ feedback character in the above-mentioned Step S202 is a HARQ feedback character based on CB Groups, i.e., each CB Group corresponds to one Bit of HARQ feedback character. For example, TB1 contains 5 CB Groups, an HARQ feedback character on LTE would indicate whether or not the entire TB1 is received successfully by a value of 0 or 1, but in the Step S202, the HARQ feedback character is **11011,** wherein **1** represents successful reception and **0** represents unsuccessful reception, so **11011** indicates that the third CB Group of TB1 is falsely received and needs to be retransmitted.

Step S203, if at least one Bit of the HARQ feedback character indicates that at least one of the Code Block Groups is not received successfully, the first device retransmits a Transport Block containing the at least one unsuccessfully-received Code Block Group to the second device, and the first device sends a corresponding control signal for the second device to identify at least one Code Block Group retransmitted.

The control signal in the Steps S201 and S203 may be Downlink Control Information (DCI), or may be Uplink Control Information (UCI). Of course, in a practical application, other downlink or uplink information may also be used, for example, a new downlink or uplink information may be created for transmitting the control signal of the TB.

For example, if the HARQ feedback character is **11011,** a TB containing the third CB Group is retransmitted to the second device, and a control signal of this TB (e.g. DCI) is also sent to the second device, the DCI allows the second device, e.g. a smart terminal, to identify the unsuccessfully-received CB Group that corresponds to the retransmission of the third CB Group.

Optionally, an implementation way of the above-mentioned Step S203 is that: the base station sends an HARQ process number of the TB where the at least one CB Group retransmitted is located, and a serial number of the at least one CB Group retransmitted in the TB.

For example, if the HARQ feedback character is **11011,** an HARQ process number of TB1, for example TB#1, together with CB#3, are sent to the smart terminal, wherein, TB#1 represents the First TB, and CB#3 represents the third CB Group in TB#1. In another example, the serial number of the retransmitted CB Group in the TB may also be indicated as follows: if the TB has **5** CB Groups with serial numbers of CB#1, CB#2, CB#3, CB#4, CB#5 and the HARQ feedback indicates the third CB Group is falsely received, when retransmitting the third CB Group, **5** Bits are used to indicate the serial number of the retransmitted CB Group, wherein, each Bit corresponds to one CB Group, the leftmost Bit, i.e. the Bit with the highest order, may correspond to the CB Group with the smallest serial number or correspond to the CB Group with the largest serial number, and the other Bits sequentially correspond to every remaining CB Groups. When the leftmost Bit, i.e. the Bit with the highest order, corresponds to the CB Group with the smallest serial number, if only the third CB Group needs to be retransmitted, the **5** Bits are **00100;** if the second and third CB Groups need to be retransmitted, the **5** Bits are **01100.** The value **"1"** of a Bit indicates a retransmitted CB Group is contained in the TB, and the value **"0"** of a Bit indicates a retransmitted CB Group is not contained in the TB. Of course, the settings may be reversed, so that the value **"0"** of a Bit indicates a retransmitted CB Group is contained in the TB, and the value **"1"** of a Bit indicates a retransmitted CB Group is not contained in the TB. Meanwhile, if the CB Groups contained in the TB all correspond to retransmission of unsuccessfully-received CB Groups in one TB, with the same HARQ process number, and this sequence of **5** Bits also tells the user about the total number of CB Groups in this TB. For example, when the value **"1"** of a Bit indicates a corresponding retransmission of a CB Group, the total number of Bits having a value of **"1"** is the total number of CB Groups in this TB.

Of course, TBs with different HARQ process numbers may have identical serial number for CB Groups in the respective TB. For example, if the HARQ feedback character for TB1 is **11011** and the HARQ feedback character for TB2 is **10011,** the CB#3 of TB#1 and the CB#2, CB#3 of TB#2 are retransmitted to the second device, herein, TB#1 and TB#2 with different HARQ process numbers have identical serial number for one CB Group in them, i.e. CB#3. One HARQ process number of a TB and one serial number of a CB Group in this TB uniquely identify one CB Group. If CB Groups have the same HARQ process number of TB and the same serial number of CB Group in TB, it suggests that the subsequently received CB Group is a retransmitted CB Group of a previously received CB Group, and that the two CB Groups can be decoded in combination.

Optionally, an implementation way of the above-mentioned Step S203 is that: the first device sends HARQ process numbers of the at least one CB Group retransmitted.

For example, if there is **13** CB Groups, wherein, CB#1, CB#2, CB#3 belong to TB#1; CB#4, CB#5, CB#6, CB#7 belong to TB#2; CB#8, CB#9 belong to TB#3; CB#10, CB#11, CB#12 belong to TB#4; and CB#13 belongs to TB#5. Because different CB Groups have different HARQ process numbers, the HARQ process number of the retransmitted CB Group needs to be sent, for example, the HARQ feedback character of TB1 is **110,** the HARQ process number of CB#3 is sent when the first device retransmits CB#3 to the second device. If the total number of HARQ processes of the CB Groups is **13,** then **4** Bits is required for indicating the HARQ process number of a CB Group. For an initial transmission or a retransmission of CB#3, its HARQ process number is **0010;** and for an initial transmission or a retransmission of CB#1, its HARQ process number is **0000.**

Herein, different CB Groups have different HARQ process numbers, so this embodiment does not make a distinction between TBs. If the same HARQ process number is assigned to different CB Groups, there would be confusion for CB Groups, which cause the first device and the second device to be unable to identify the CB Groups. Therefore, it is required herein to assign different HARQ process numbers to different CB Groups, so that inter-TB identification can be realized.

In the technical solution provided by the present invention, the first device sends a control signal corresponding to the CB Groups to be retransmitted, so that retransmission based on basic units of CB Groups is made possible, with the advantage of high efficiency.

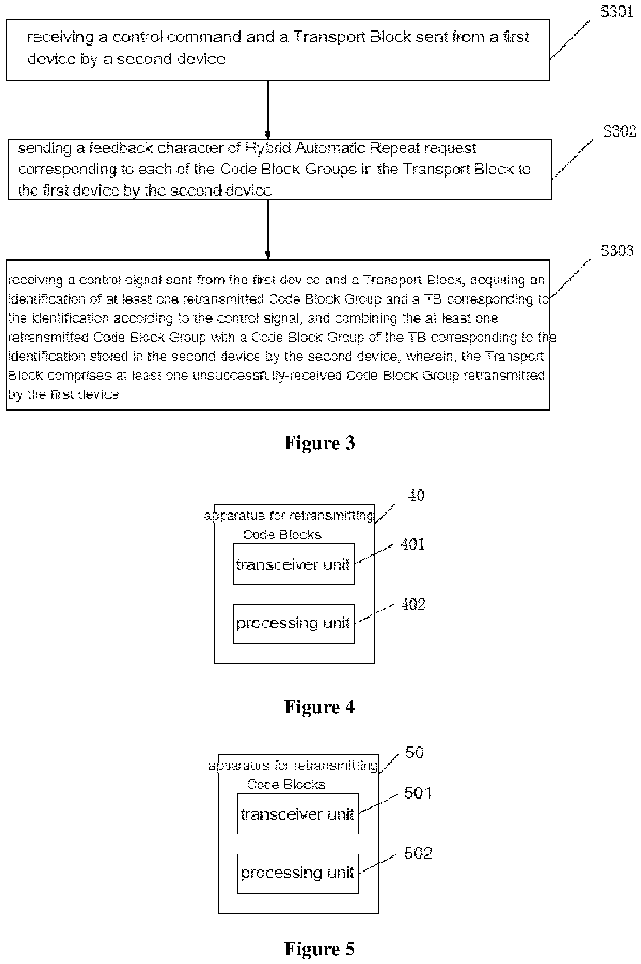

Referring to Figure 3, a method of retransmitting Code Blocks provided, as shown in Figure 3, comprises:
Step 301, receiving a control command and a TB sent from a first device by a second device, wherein, the TB comprises at least one CB Group which is a basic unit for sending the TB.
Step S302, sending an HARQ feedback character corresponding to each of the CB Groups in the TB to the first device by the second device.
Step S303, receiving a control signal sent from the first device and a TB that comprises at least one unsuccessfully-received CB Group retransmitted from the first device, acquiring an identification of the at least one CB Group retransmitted according to the control signal, and combining the at least one CB Group retransmitted with a CB Group corresponding to the identification stored in a terminal, by the second device.

The control signal in the Steps S301 and S303 may be Downlink Control Information (DCI), or may be Uplink Control Information (UCI). Of course, in a practical application, other downlink or uplink information may also be used, for example, a new downlink or uplink information may be created for transmitting the control signal of the TB.

In the method provided by the present invention, after receiving at least one CB Group retransmitted in basic units of CB Groups, the at least one CB Group retransmitted is combined with a CB Group corresponding thereto stored in a terminal, so that retransmission in basic units of CB Groups is supported.

Referring to Figure 4, an apparatus 40 for retransmitting Code Blocks is provided. The technical terms and detailed scheme of the embodiment shown in Figure 4 can refer to the embodiment shown in Figure 2, which is not described repeatedly herein. Wherein, the apparatus comprises:
A transceiver unit 401, for sending a control command and a TB to a second device, wherein, the TB comprises at least one CB Group which is a basic unit for sending the TB, and also for receiving an HARQ feedback character corresponding to each of the CB Groups in the TB sent from the second device;

A processing unit 402, for retransmitting a TB containing at least one unsuccessfully-received CB Group to the second device and sending a corresponding control signal for the second device to identify the at least one CB Group retransmitted under the condition that at least one Bit of the HARQ feedback characters indicates that at least one CB Group is not received successfully.

The control signals handled by the transceiver unit 401 and the processing unit 402 may be Downlink Control Information (DCI), or may be Uplink Control Information (UCI). Of course, in a practical application, other downlink or uplink information may also be used, for example, a new downlink or uplink information may be created for transmitting the control signal of the TB.

Optionally, the processing unit 402 in particular sends an HARQ process number of the TB where the at least one CB Group retransmitted is located, and a serial number that the at least one CB Group retransmitted has in this TB.

Optionally, the processing unit 402 in particular sends at least one HARQ process number of the at least one Code Block Group retransmitted.

In the apparatus for retransmitting Code Blocks provided by the present invention, by sending a control signal corresponding to the CB Groups to be retransmitted, retransmission based on basic units of CB Groups is made possible, so that the advantage of high efficiency is achieved.

Referring to Figure 5, an apparatus 50 for retransmitting Code Blocks is provided, wherein, the apparatus comprises:
A transceiver unit 501, for receiving a control command and a TB sent from a first device, wherein, the TB comprises at least one CB Group which is a basic unit for sending the Transport Block, and also for sending an HARQ feedback character corresponding to each of the CB Groups in the TB to the first device;

A processing unit 502, for receiving a control signal sent from the first device and a TB that comprises at least one unsuccessfully-received CB Group retransmitted from the first device, acquiring an identification of the at least one CB Group retransmitted according to the control signal, and combining the at least one CB Group retransmitted with a CB Group corresponding to the identification stored in a terminal.

The control signals handled by the transceiver unit 501 and the processing unit 502 may be Downlink Control Information (DCI), or may be Uplink Control Information (UCI). Of course, in a practical application, other downlink or uplink information may also be used, for example, a new downlink or uplink information may be created for transmitting the control signal of the TB.

In the apparatus for retransmitting Code Blocks provided by the present invention, after receiving at least one CB Group retransmitted in basic units of CB Groups, the at least one CB Group retransmitted is combined with a CB Group corresponding thereto stored in a terminal, so that retransmission in basic units of CB Groups is supported.

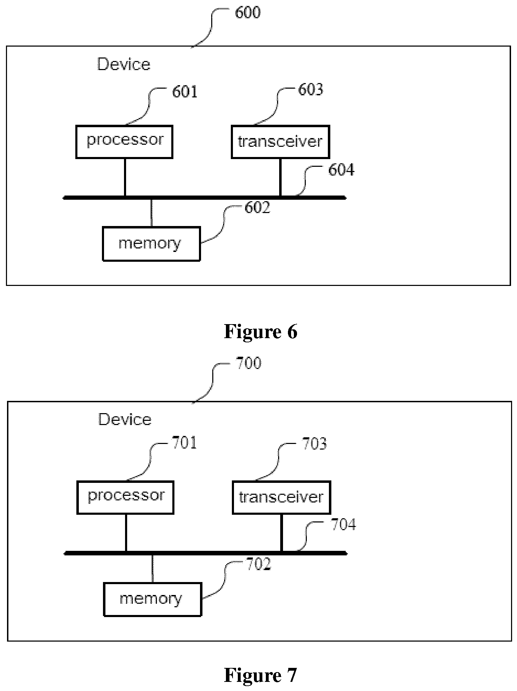

Referring to Figure 6, the embodiment of the present invention also provides a device 600, which includes, but not limited to, a smartphone, a smart watch, a tablet computer, a personal computer, a notebook computer, a computer group or a base station, wherein, the device 600 as shown in Figure 6 comprises a processor 601, a memory 602, a transceiver 603 and a bus line 604. The transceiver 603 is for sending data to and receiving data from external devices. The processor 601 in the terminal device 600 may be one or more. In some embodiments of the present application, the processor 601, the memory 602 and the transceiver 603 may be interconnected by the bus line or in other ways. The device 600 can be used to carry out the method shown in Figure 2. Specifically, the processor 601 can call the program codes stored in the memory 602 to execute the following operations steps:
sending a control command and a Transport Block to a second device, wherein, the Transport Block comprises at least one Code Block Group which is a basic unit for sending the Transport Block;
receiving a feedback character of Hybrid Automatic Repeat request corresponding to each of the Code Block Groups in the Transport Block sent from the second device;
if at least one of the feedback characters of Hybrid Automatic Repeat request indicates that at least one Code Block Group is not received successfully, retransmitting a Transport Block containing at least one unsuccessfully-received Code Block Group to the second device and sending a corresponding control signal for the second device to identify the at least one Code Block Group retransmitted.

Wherein, the memory 602 stores program codes; and the processor 601 calls the program codes stored in the memory 602 to execute the steps shown in Figure 2 or Figure 3.

It should be noted that, the processor 601 herein may be one processing element, or may be a joint name of multiple processing elements. For example, the processor may be a Central Processing Unit (CPU), or may be an Application Specific Integrated Circuit (ASIC), or may be configured as one or more integrated circuits for implementing the embodiments of the present application, such as one or more Digital Signal Processors (DSPs), one or more Field Programmable Gate Arrays (FPGAs).

The memory 602 may be one storage element, or may be a joint name of multiple storage elements, for storing executable program codes as well as parameters and data required for running the application program. The memory 602 may comprise a Random Access Memory (RAM), or a non-volatile memory such as a magnetic storage or a Flash drive.

The bus line 604 may be an Industry Standard Architecture (ISA) bus line, a Peripheral Component Interface (PCI) bus line, or an Extended Industry Standard Architecture (EISA) bus line. The bus line can be divided into an address bus line, a data bus line and a control bus line. For easy depiction, figure 6 uses only one thick line to show it, but this does not mean there is only one bus line or one type of bus line.

The device 600 may also comprise an input and output apparatus connected to the bus line 604, so as to be connected to other components such as the processor 601 through the bus line. The input and output apparatus provide an input interface for an operator, so that the operator can select a controlled option through this input interface; it may also be other interfaces for connecting to other external devices.

Referring to Figure 7, the embodiment of the present invention also provides another device 700, which includes, but not limited to, a smartphone, a smart watch, a tablet computer, a personal computer, a notebook computer, a computer group or a base station, wherein, the device 700 as shown in Figure 7 comprises a processor 701, a memory 702, a transceiver 703 and a bus line 704. The transceiver 703 is for sending data to and receiving data from external devices. The processor 701 in the terminal device 700 may be one or more. In some embodiments of the present application, the processor 701, the memory 702 and the transceiver 703 may be interconnected by the bus line or in other ways. The device 700 can be used to carry out the method shown in Figure 3. Specifically, the processor 701 can call the program codes stored in the memory 702 to execute the following operations steps:
receiving a control command and a Transport Block sent from a first device, wherein, the Transport Block comprises at least one Code Block Group which is a basic unit for sending the Transport Block;
sending a feedback character of Hybrid Automatic Repeat request corresponding to each of the Code Block Groups in the Transport Block to the first device;
receiving a control signal and a Transport Block from the first device, acquiring an identification of at least one Code Block Group retransmitted according to the control signal, and combining the at least one Code Block Group retransmitted with a Code Block Group corresponding to the identification stored in a terminal, wherein, the Transport Block comprises at least one unsuccessfully-received Code Block Group retransmitted by the first device.

Wherein, the memory 702 stores program codes; and the processor 701 calls the program codes stored in the memory 702 to execute the steps shown in Figure 3.

It should be noted that, the processor 701 herein may be one processing element, or may be a joint name of multiple processing elements. For example, the processor may be a Central Processing Unit (CPU), or may be an Application Specific Integrated Circuit (ASIC), or may be configured as one or more integrated circuits for implementing the embodiments of the present application, such as one or more Digital Signal Processors (DSPs), one or more Field Programmable Gate Arrays (FPGAs).

The memory 702 may be one storage element, or may be a joint name of multiple storage elements, for storing executable program codes as well as parameters and data required for running the application program. The memory 702 may comprise a Random Access Memory (RAM), or a non-volatile memory such as a magnetic storage or a Flash drive.

The bus line 704 may be an Industry Standard Architecture (ISA) bus line, a Peripheral Component Interface (PCI) bus line, or an Extended Industry Standard Architecture (EISA) bus line. The bus line can be divided into an address bus line, a data bus line and a control bus line. For easy depiction, figure 7 uses only one thick line to show it, but this does not mean there is only one bus line or one type of bus line.

The device 700 may also comprise an input and output apparatus connected to the bus line 704, so as to be connected to other components such as the processor 701 through the bus line. The input and output apparatus provide an input interface for an operator, so that the operator can select a controlled option through this input interface; it may also be other interfaces for connecting to other external devices.

It should be noted that, for easy description, the aforementioned various method embodiments are described as a combination of a series of operations, however, as should be known by a person skilled in the art, the present invention is not limited to the described sequence of operations, because, according to the present invention, some of the steps can be performed in another sequence or performed concurrently. Secondly, as also should be known by a person skilled in the art, the embodiments described in the specification are preferred embodiments, and the operations and units involved are not necessarily necessities of the present invention.

In the aforementioned embodiments, the various embodiments are described with their own emphases, and the part not described in detail in one embodiment can refer to related description in other embodiments.

The steps in the method embodiments of the present invention can be adjusted with respect to their sequence, combined, or omitted, according to actual requirements.

The units in the apparatus embodiments of the present invention can be combined, divided or omitted according to actual requirements. A person skilled in the art can combine various embodiments as well as various features of embodiments described in the specification.

From the aforementioned embodiments, a person skilled in the art can clearly know the present invention may be implemented by software, hardware, firmware or a combination thereof. When it is implemented by software, the aforementioned functions may be stored in a computer readable medium or transmitted as one or more instructions or codes on a computer readable medium. The computer readable medium includes a computer storage medium and a communication medium, wherein, the communication medium includes any medium for transmitting a computer program from one place to another; the storage medium may be any usable medium for a computer to access. The computer readable medium may include, for example, but not limited to, a Random Access Memory (RAM), a Read-Only Memory (ROM), an Electrically Erasable Programmable Read-Only Memory (EEPROM), a Compact Disk Read-Only Memory (CD-ROM) or other optical disk storage media, a magnetic disk storage medium or other magnetic disk storage devices, or any other media capable of carrying or storing the desired program codes with instructions and data structure forms and capable of being accessed by a computer. Besides, any connection medium can be a suitable computer readable medium. For example, if the software is transmitted from a website, a server or other remote sources by means of a coaxial cable, an optical fiber cable, a twisted-pair cable, a Digital Subscriber Line (DSL), or a wireless technique such as infrared, wireless waves or microwaves, then such coaxial cable, optical fiber cable, twisted-pair cable, DSL, or wireless technique such as infrared, wireless waves or microwaves are all covered by the definition of the computer readable medium. As used in the present invention, a Disk/disk includes a Compact Disk (CD), a laser Disk, an optical Disk, a Digital Versatile Disk (DVD), a floppy disk, or a Bluelight Disk, wherein, a disk copies data magnetically, while a Disk copies data optically with laser. A combination of the above should also be included in the protection scope of the computer readable medium.

The above disclosed is just preferred embodiments of the technical solutions of the present invention, which is not intended to limit the protection scope of the present invention, therefore, any changes, equivalent variants and modifications within the concept and principle of the present invention should be included in the protection scope of the present invention.

## Claims

1. A method of retransmitting Code Blocks, wherein, the method comprises:
sending a control command and a Transport Block to a second device by a first device, wherein, the Transport Block comprises at least one Code Block Group which is a basic unit for sending the Transport Block;
receiving a feedback character of Hybrid Automatic Repeat request corresponding to each of the Code Block Groups in the Transport Block sent from the second device by the first device;
if at least one of the feedback characters of Hybrid Automatic Repeat request indicates that at least one of the Code Block Groups is not received successfully, the first device retransmits a Transport Block containing the at least one unsuccessfully-received Code Block Group to the second device, and the first device sends a corresponding control signal for the second device to identify the at least one Code Block Group retransmitted.

2. The method according to Claim 1, wherein,
the control signal comprises a Hybrid Automatic Repeat request process number of the Transport Block where the at least one Code Block Group retransmitted is located, and one serial number of the at least one Code Block Group retransmitted in the Transport Block;
different Transport Blocks have identical serial number for Code Block Groups in the respective Transport Block, and the serial number in one Transport Block uniquely identifies one Code Block Group in one Transport Block.

3. The method according to Claim 1, wherein,
the control signal comprises a Hybrid Automatic Repeat request process number of the at least one Code Block Group retransmitted; and
Code Block Groups in one Transport Block have different Hybrid Automatic Repeat request process numbers.

4. A method of retransmitting Code Blocks, wherein, the method comprises:
receiving a control command and a Transport Block sent from a first device by a second device, wherein, the Transport Block comprises at least one Code Block Group which is a basic unit for sending the Transport Block;
sending a feedback character of Hybrid Automatic Repeat request corresponding to each of the Code Block Groups in the Transport Block to the first device by the second device;
receiving a control signal and a Transport Block from the first device, acquiring an identification of at least one Code Block Group retransmitted according to the control signal, and combining the at least one Code Block Group retransmitted with a Code Block Group corresponding to the identification stored in a terminal by the second device, wherein, the Transport Block comprises at least one unsuccessfully-received Code Block Group retransmitted by the first device.

5. An electronic device for retransmitting Code Blocks, wherein, the electronic device comprises a processor, a memory and a transceiver interconnected by a bus line, the transceiver is for sending and receiving data, the memory is for storing program codes, the processor is for calling the program codes stored in the memory to execute the following steps:
sending a control command and a Transport Block to a second device, wherein, the Transport Block comprises at least one Code Block Group which is a basic unit for sending the Transport Block;
receiving a feedback character of Hybrid Automatic Repeat request corresponding to each of the Code Block Groups in the Transport Block sent from the second device;
if at least one of the feedback characters of Hybrid Automatic Repeat request indicates that at least one Code Block Group is not received successfully, retransmitting a Transport Block containing at least one unsuccessfully-received Code Block Group to the second device and sending a corresponding control signal for the second device to identify the at least one Code Block Group retransmitted.

6. The electronic device according to Claim 5, wherein,
the control signal comprises a Hybrid Automatic Repeat request process number of the Transport Block where the at least one Code Block Group retransmitted is located, and a serial number that the retransmitted at least one Code Block Group has in said Transport Block;
different Transport Blocks have identical serial number for Code Block Groups in the respective Transport Block, and the serial number in one Transport Block uniquely identifies one Code Block Group in one Transport Block.

7. The electronic device according to Claim 5, wherein,
the control signal comprises a Hybrid Automatic Repeat request process number of the at least one Code Block Group retransmitted; and
Code Block Groups in one Transport Block have different Hybrid Automatic Repeat request process numbers.

8. An electronic device for retransmitting Code Blocks, wherein, the electronic device comprises a processor, a memory and a transceiver interconnected by a bus line, the transceiver is for sending and receiving data, the memory is for storing program codes, the processor is for calling the program codes stored in the memory to execute the following steps:
receiving a control command and a Transport Block sent from a first device, wherein, the Transport Block comprises at least one Code Block Group which is a basic unit for sending the Transport Block;
sending a feedback character of Hybrid Automatic Repeat request corresponding to each of the Code Block Groups in the Transport Block to the first device;
receiving a control signal sent from the first device and a Transport Block containing at least one unsuccessfully-received Code Block Group retransmitted by the first device, acquiring an identification of the at least one Code Block Group retransmitted according to the control signal, and combining the at least one Code Block Group retransmitted with a Code Block Group corresponding to the identification stored in a terminal.

9. A device, **characterized in** comprising the electronic device for retransmitting Code Blocks according to any one of Claims 5-7.

10. A device, **characterized in** comprising the electronic device for retransmitting Code Blocks according to Claim 8.
